# DEMANDE DE BREVET EUROPEEN

(11) **EP 0 554 234 A1**
(43) Date de publication de la demande: **04.08.1993**
(21) Numéro de dépôt: 93870019.2
(22) Date de dépôt: 28.01.1993
(51) Int. Cl.: B62H 3/10

(54) **Râtelier composé pour vélos**

(30) Priorité: 28.01.1992 BE 9200082
(71) Demandeur: Oleksy, Pietro, B-3630 Maasmechelen (BE)
(72) Inventeur: Oleksy, Pietro, B-3630 Maasmechelen (BE)
(74) Mandataire: Pieraerts, Jacques

(57) **Abrégé**

L'invention concerne un râtelier composé pour vélos, caractérisé en ce qu'il consiste en une structure montée à charnière par rapport au sol ou sur un châssis, structure qui consiste en éléments en forme d'étriers (11, respectivement 12, 13) qui forment entre-eux un angle d'environ 120° et dont les dimensions sont choisies de telle sorte qu'elles s'adaptent toutes deux à une roue de vélo lorsque cette roue a été glissée dans l'un de ces éléments en forme d'étriers tandis que l'autre élément en forme d'étrier est pourvu d'un cadenas à l'aide duquel la buse inférieure d'un cadre de vélo peut être saisie.

## Description

Cette invention se rapporte à un râtelier composé pour vélos.

L'invention concerne la construction d'un râtelier pour vélos et d'un système de verrouillage qui s'y rapporte et qui est construit de telle sorte que les possibilités de vol d'un vélo placé dans ce râtelier sont réduites à néant. De toute évidence il est aussi proposé de monter côte à côte plusieurs râteliers sur un support de base.

Les systèmes anti-vol mis actuellement sur le marché sont réalisés de telle sorte que soit le système anti-vol est de construction trop légère, soit que pour les modèles plus robustes les frais sont trop élevés ou encore que la possibilité existe de voler le vélo de même que le système de verrouillage.

Le but de l'invention est de réaliser un râtelier à vélos qui permet de capter la roue avant d'un vélo placé dans ce râtelier et de fixer à l'aide d'un cadenas la partie inférieure du cadre d'un vélo à un élément pivotant.

L'invention est réalisée de telle sorte que lors du placement d'un vélo dans le râtelier à vélos monté à charnière, le râtelier occupe une telle position qu'après placement du cadenas spécialement construit à cet effet, le vélo ne peut plus être retiré du râtelier sans faire usage de moyens qui, soit endommagent gravement le vélo, soit prennent un temps considérable.

Pour réaliser cet objectif conformément à l'invention, le râtelier pour vélos selon l'invention consiste en une structure montée à charnière par rapport au sol ou sur un châssis, structure qui consiste en éléments en forme d'étriers qui forment entre-eux un angle d'environ 120° et dont les dimensions sont choisies de telle sorte qu'elles s'adaptent toutes deux à une roue de vélo lorsque cette roue a été glissée dans l'un de ces éléments en forme d'étriers tandis que l'autre élément en forme d'étrier est pourvu d'un cadenas à l'aide duquel la buse inférieure d'un cadre de vélo peut être saisie.

Toujours selon l'invention, les éléments en forme d'étriers précités sont de longueurs différentes et le plus long de ces deux éléments en forme d'étriers occupe, au repos, une position pratiquement horizontale, de telle sorte que la roue du vélo peut rouler sur cet élément.

Un détail remarquable de l'invention réside dans le fait que les extrémités de l'élément en forme d'étrier le plus long présentent des orifices dans lesquelles les tenons d'un cadenas peuvent être introduites après rotation à l'aide d'un clef.

D'autres détails et avantages de l'invention ressortiront de la description qui sera donnée ci-après d'un râtelier composé pour vélos et de son cadenas, selon l'invention. Cette description n'est uniquement donnée qu'à titre d'exemple et ne limite pas l'invention. Les notations de référence se rapportent aux figures ci-jointes.

Figure 1 est une vue en plan montrant deux éléments en forme d'étriers, de longueurs différentes, qui constituent l'élément principal du râtelier pour vélos.

La figure 2 est une vue latérale de ces mêmes éléments.

La figure 3 représente, à une échelle fortement agrandie, par rapport aux figures 1 et 2, le cadenas selon l'invention.

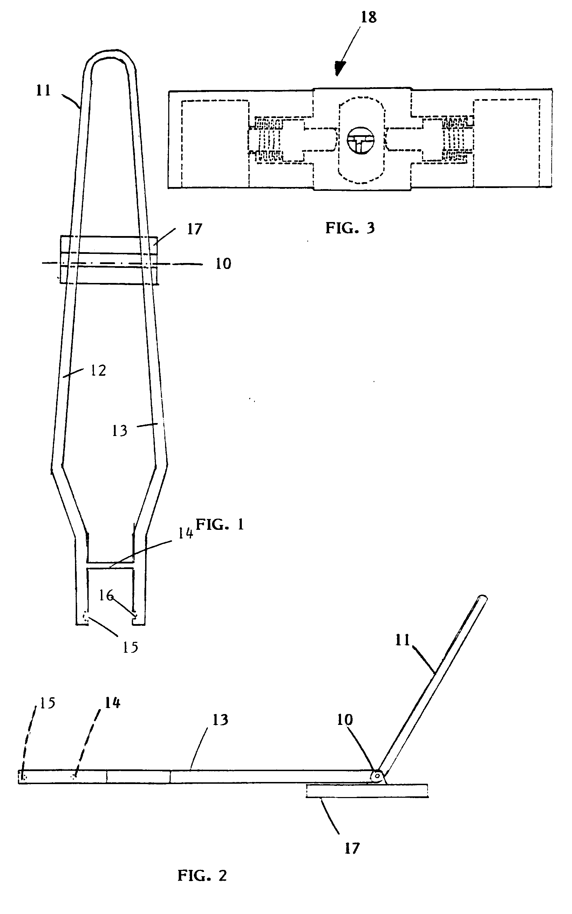

Tel que représenté à la figure 1, un élément massif en forme d'étrier 11 et deux tiges courbées 12 et 13 sont soudées sur l'axe 10. Les tiges 12 et 13 forment un autre élément en forme d'étrier. On remarque immédiatement que la longueur de l'élément en forme d'étrier 11 est plus petite que celle de l'élément en forme d'étrier qui est constitué par les tiges 12 et 13.

Une tige 14 relie ces tiges 12 et 13 à proximité de leurs extrémités. Dans les extrémités de ces deux tiges 12 et 13 on a prévu des orifices 15 et 16 dans lesquels peuvent s'introduire les tenons du cadenas selon la figure 3 et cela après la rotation d'une clef.

Les tiges 12 et 13 forment entre elles, à hauteur de l'axe 10, un angle d'environ 120° ainsi qu'on peut le déduire de la figure 2. L'axe 10 constitue un axe de rotation qui est fixé sur un châssis 17. Ce châssis est représenté très schématiquement aux figures 1 et 2 et peut être constitué par toute construction qui peut être fixée au sol, mais peut être également un bloc de béton. A la figure 1 l'axe de rotation 10 est représenté par une ligne en point-tiret.

Lorsqu'on déplace le vélo par-dessus l'élément en forme d'étrier formé par les tiges 12 et 13 et qui s'étend sensiblement horizontalement et qu'on repousse le vélo jusqu'à la roue avant soit saisie dans l'élément 11, le râtelier proprement dit bascule sur environ 120° de telle sorte que les tiges 12 et 13 qui constituent l'élément en forme d'étrier le plus long viennent se placer par leurs extrémités à hauteur de la buse inférieure d'un cadre de vélos. Cette buse est alors saisie entre les extrémités des tiges 12 et 13 de telle sorte que le cadenas 18 (figure 3) peut remplir sa fonction. Le vélo est alors garanti contre toute tentative de vol.

Le râtelier à vélos selon l'invention est construit de telle sorte que lorsqu'on place un vélo avec sa roue avant dans le râtelier, la partie pivotante de celle-ci vient à occuper une position telle qu'après placement d'un système de verrouillage le vélo ne peut plus être enlevé du râtelier sans faire usage de moyens qui prennent un temps considérable ou endommagent fortement le vélo.

La robustesse du râtelier pour vélos et de son système de cadenas est réalisée en faisant usage de tiges métalliques soudées entre elles et qui peuvent être recouvertes d'un matériau résistant à la corrosion ou une protection en caoutchouc ou matière synthétique pour ce qui est de la partie du râtelier qui vient en contact avec le cadre du vélo. L'ensemble peut, de toute manière, être fixé au sol de toute manière appropriée. Ainsi qu'on l'a déjà dit, un bloc de béton, une plaque d'acier ou des matériaux techniquement équivalents entrent en ligne de compte.

Il est enfin évident que l'élément 11 en forme d'étrier et les tiges 12 et 13 peuvent être formés à partir d'un seul élément tubulaire.

## Revendications

1. Râtelier composé pour vélos, caractérisé en ce qu'il consiste en une structure montée à charnière par rapport au sol ou sur un châssis, structure qui consiste en éléments en forme d'étriers (11, respectivement 12, 13) qui forment entre-eux un angle d'environ 120° et dont les dimensions sont choisies de telle sorte qu'elles s'adaptent toutes deux à une roue de vélo lorsque cette roue a été glissée dans l'un de ces éléments en forme d'étriers tandis que l'autre élément en forme d'étrier est pourvu d'un cadenas à l'aide duquel la buse inférieure d'un cadre de vélo peut être saisie.

2. Râtelier composé pour vélos selon la revendication 1, caractérisé en ce que les éléments en forme d'étriers précités sont de longueurs différentes et en ce que le plus long de ces deux éléments en forme d'étriers (12, 13) occupe, au repos, une position pratiquement horizontale de telle sorte que la roue du vélo peut rouler sur cet élément.

3. Râtelier composé pour vélos selon la revendication 2, caractérisé en ce que les extrémités de l'élément en forme d'étrier le plus long présentent des orifices (15) et (16) dans lesquels les tenons d'un cadenas peuvent être introduits après rotation à l'aide d'une clef.
